(19) Europäisches Patentamt
European Patent Office
Office européen des brevets

(11) EP 3 029 300 A2

(12) EUROPEAN PATENT APPLICATION

(43) Date of publication:
**08.06.2016 Bulletin 2016/23**

(21) Application number: **15198057.0**

(22) Date of filing: **04.12.2015**

(51) Int Cl.:
***F02D 37/02** (2006.01)*
***F02P 5/04** (2006.01)*
***F02D 41/02** (2006.01)*
*F02D 11/10 (2006.01)*
*B60W 10/08 (2006.01)*
***F02D 13/02** (2006.01)*
***F02D 33/02** (2006.01)*
***F02P 5/15** (2006.01)*
*B60W 10/06 (2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **04.12.2014 JP 2014245987**

(71) Applicant: **Toyota Jidosha Kabushiki Kaisha**
**Toyota-shi, Aichi-ken 471-8571 (JP)**

(72) Inventors:
- **ENDO, Hiroki**
  **TOYOTA-SHI, AICHI-KEN, 471-8571 (JP)**
- **MARUYAMA, Kenya**
  **TOYOTA-SHI, AICHI-KEN, 471-8571 (JP)**
- **YAMAZAKI, Makoto**
  **TOYOTA-SHI, AICHI-KEN, 471-8571 (JP)**

(74) Representative: **Intès, Didier Gérard André et al**
**Cabinet Beau de Loménie**
**158, rue de l'Université**
**75340 Paris Cedex 07 (FR)**

# (54) AUTOMOBILE WITH INTERNAL COMBUSTION ENGINE CONTROL FOR CATALYST WARM UP

(57) When a catalytic converter is to be warmed up, a required efficiency (ηtag) for internal combustion engine control is set to a value within a range of less than 1, 1 representing a value when the conversion catalyst is not to be warmed up. The value is increased with an increase in delay of an open-close timing (VT) of an intake valve (steps S130 to S160). A delayed amount of a target ignition timing (IT*) is decreased with an increase in required efficiency (ηtag closer to the value 1; steps S170 and S180).

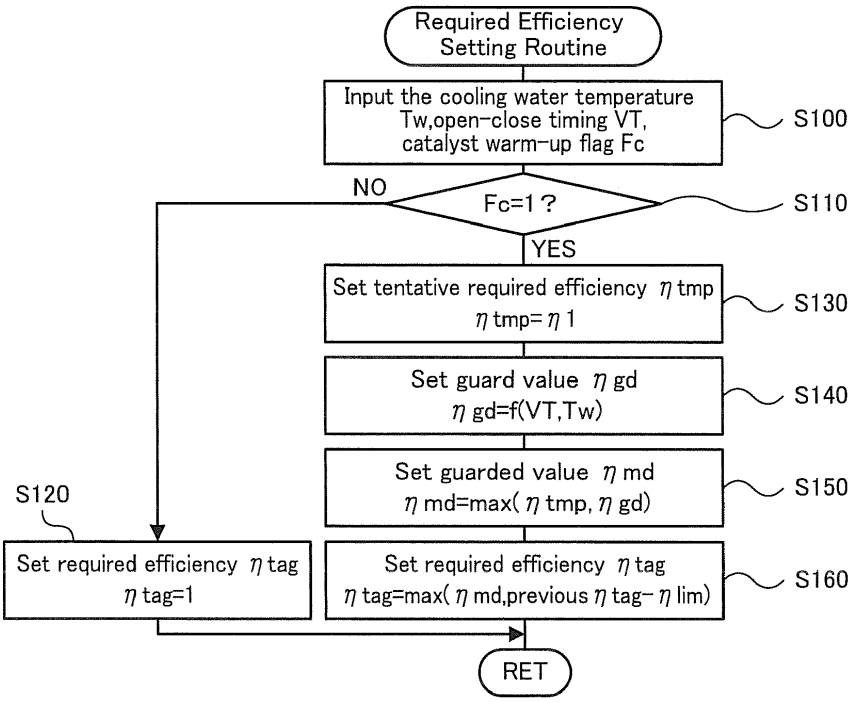


FIG. 7



Printed by Jouve, 75001 PARIS (FR)

## Description

### Technical Field

The present invention relates to an automobile and more specifically an automobile equipped with an engine.

### Background Art

A proposed automobile is equipped with an engine including a variable valve mechanism configured to change at least the open-close timing of an intake valve and a three-way catalyst configured to purify the exhaust emission (for example, Patent Literature 1). During a time duration from a start of the engine to completion of warm-up of the three-way catalyst, in a low loading range, this proposed automobile delays the open-close timing of the intake valve and increases the delayed amount of the ignition timing, compared with the ignition timing in a range other than the low loading range. This aims to accelerate activation of the three-way catalyst.

### Summary of Invention

### Technical problem

Setting a relatively large delayed amount of the ignition timing at a relatively large delayed amount of the open-close timing of the intake valve is, however, likely to cause unstable combustion. Unstable combustion of the engine is likely to increase an output variation of the engine. This may lead to rattling-induced abnormal noise in a gear mechanism connected with the engine.

With regard to an automobile, an object of the invention is to suppress rattling-induced abnormal noise in a gear mechanism connected with an engine during warm-up of a conversion catalyst in an emission control apparatus of the engine.

### Solution to Problem

In order to achieve the above primary object, the automobile of the invention employs the following configuration.

The present invention is directed to an automobile. The automobile includes an engine that includes a variable valve timing mechanism configured to change an open-close timing of an intake valve and is linked with an axle via a gear mechanism, and a controller that is configured to delay an ignition timing of the engine in the case where a catalyst in an emission control apparatus of the engine is warmed up, compared with an ignition timing in the case where the catalyst is not warmed up. The controller decreases a delayed amount of the ignition timing with an increase in delay of the open-close timing, when the catalyst is warmed up.

The automobile of this aspect delays the ignition timing of the engine in the case where the catalyst in the emission control apparatus of the engine is warmed up, compared with the ignition timing in the case where the catalyst is not warmed up. This accelerates warm-up of the catalyst. When the catalyst is warmed up, the delayed amount of the ignition timing is decreased with an increase in delay of the open-close timing of the intake valve. This suppresses a relatively large delayed amount of the ignition timing from being set at a relatively large delayed amount of the open-close timing of the intake valve (for example, at the most delayed open-close timing). This accordingly suppresses unstable combustion of the engine and suppresses an increase in output variation of the engine. As a result, this suppresses rattling-induced abnormal noise in a gear mechanism connected with the engine. In the description hereof, "case where the catalyst is warmed up" means that case that the temperature of the catalyst is lower than a predetermined temperature, and "case where the catalyst is not warmed up" means that the temperature of the catalyst is equal to or higher than the predetermined temperature.

### Brief Description of Drawings

Fig. 1 is a configuration diagram illustrating the schematic configuration of a hybrid vehicle according to one embodiment of the invention;
Fig. 2 is a configuration diagram illustrating the schematic configuration of an engine;
Fig. 3 is a configuration diagram illustrating the schematic configuration of a variable valve timing mechanism;
Fig. 4 is a configuration diagram illustrating the schematic configuration of the variable valve timing mechanism;
Fig. 5 is a diagram showing one example of a change in open-close timing VT of an intake valve in the case of advancing the angle of an intake cam shaft and a change in open-close timing VT of the intake valve in the case of delaying the angle of the intake cam shaft;

Fig. 6 is a configuration diagram illustrating the schematic configuration of a lock pin;

Fig. 7 is a flowchart showing an exemplary required efficiency setting routine performed by an engine ECU of the embodiment;

Fig. 8 is a diagram illustrating one example of a guard value setting map;

Fig. 9 is a diagram showing one example of time changes in tentative required efficiency $\eta tmp$, guard value $\eta gd$, required efficiency $\eta tag$, target ignition timing IT* and target open-close timing VT* and open-close timing VT of the intake valve when warm-up of a conversion catalyst is required after a start of the engine;

Fig. 10 is a diagram illustrating one example of a relationship between open-close timing VT of the intake valve and target ignition timing IT*;

Fig. 11 is a configuration diagram illustrating the schematic configuration of another hybrid vehicle according to a modification;

Fig. 12 is a configuration diagram illustrating the schematic configuration of another hybrid vehicle according to another modification;

Fig. 13 is a configuration diagram illustrating the schematic configuration of another hybrid vehicle according to another modification; and

Fig. 14 is a configuration diagram illustrating the schematic configuration of another hybrid vehicle according to another modification.

Description of Embodiments

The following describes some aspects of the invention with reference to embodiments.

Fig. 1 is a configuration diagram illustrating the schematic configuration of a hybrid vehicle 20 according to one embodiment of the invention. As illustrated, the hybrid vehicle 20 of the embodiment includes an engine 22, a planetary gear 30, motors MG1 and MG2, inverters 41 and 42, a battery 50 and a hybrid electronic control unit (hereinafter referred to as HVECU) 70.

The engine 22 is configured as an internal combustion engine to use gasoline, light oil or the like as a fuel and output power. Fig. 2 is a configuration diagram illustrating the schematic configuration of the engine 22. As illustrated, the engine 22 takes in the air purified by an air cleaner 62 via a throttle valve 124 while injecting the fuel from a fuel injection valve 126 to mix the air with the fuel, and introduces the air-fuel mixture through an intake valve 128 into a combustion chamber. The engine 22 causes the intake air-fuel mixture to be explosively combusted with an electric spark by a spark plug 130 and converts the reciprocating motions of a piston 132 pressed down by the energy of explosive combustion into rotating motions of a crankshaft 26. The exhaust emission from the combustion chamber goes through a catalytic converter 134 filled with a conversion catalyst (three-way catalyst) 134a that serves to convert toxic components such as carbon monoxide (CO), hydrocarbons (HC) and nitrogen oxides (NOx) and is discharged to the outside air. The exhaust emission from the combustion chamber is resupplied to the air intake side through an exhaust gas recirculation (EGR) system 180 that is configured to recirculate the exhaust emission to the intake air, in addition to being discharged to the outside air. The EGR system 180 includes an EGR pipe 182 and an EGR valve 184. The EGR pipe 182 is connected with the downstream side of the catalytic converter 134 and is used to supply the exhaust emission to a surge tank on the air intake side. The EGR valve 184 is provided in the EGR pipe 182 and is driven by a stepping motor 183. The EGR system 180 adjusts the position of the EGR valve 184 to regulate the recirculation amount of the exhaust emission as uncombusted gas and recirculates the regulated amount of the exhaust emission to the air intake side. The engine 22 accordingly introduces the air-fuel mixture of the air, the exhaust emission and gasoline to the combustion chamber.

The engine 22 also has a variable valve timing mechanism 150 configured to continuously vary an open-close timing VT of the intake valve 128. Fig. 3 and 4 are configuration diagrams illustrating the schematic configuration of a variable valve timing mechanism. As illustrated, the variable valve timing mechanism 150 includes a vane-type WT controller 152, a vane position sensor 153 and an oil control valve 156. The WT controller 152 includes a housing 152a and a vane 152b. The housing 152a is fixed to a timing gear 164 that is connected with the crankshaft 26 via a timing chain 162. The vane 152b is fixed to an intake cam shaft 129 that is configured to open and close the intake valve 128. The vane position sensor 153 detects the position of the vane 152b. The oil control valve 156 causes a hydraulic pressure to be applied to an advance chamber and a retard chamber of the WT controller 152. The variable valve timing mechanism 150 adjusts the hydraulic pressure that is to be applied to the advance chamber and the retard chamber of the WT controller 152, via the oil control valve 156, so as to rotate the vane 152b relative to the housing 152a. The variable valve timing mechanism 150 thereby continuously varies the angle of the intake cam shaft 129 at the open-close timing VT of the intake valve 128. Fig. 5 is a diagram showing one example of a change in open-close timing VT of an intake valve 128 in the case of advancing the angle of an intake cam shaft 129 and a change in open-close timing VT of the intake valve 128 in the case of delaying the angle of the intake cam shaft 129. This embodiment employs the following configuration. A reference angle is set to an angle of the intake cam shaft 129 corresponding to the open-close timing VT of the intake valve 128 that enables power to be output from the engine 22 with high efficiency. Advancing the angle of the intake cam shaft 129 from the reference angle sets the engine 22 in an operating state that allows a high torque to be output from the engine 22. Delaying the angle of the intake cam shaft 129 to the most delayed angle, on the other hand, reduces a pressure variation in the cylinder of the engine 22 and sets the engine 22 in an operating state that is suitable for a stop and a restart of the engine 22. In the description below, advancing the open-close timing VT of the intake valve 128 or, in other words, advancing the angle of the intake cam shaft 129 is referred to as "advancing". Delaying the open-close timing VT of the intake valve 128 or, in other words, delaying the angle of the intake cam shaft 129 is referred to as "delaying".

A lock pin 154 is mounted to the vane 152b of the VVT controller 152 to fix the relative rotation of the vane 152b to the housing 152a. Fig. 6 is a configuration diagram illustrating the schematic configuration of a lock pin 154. As illustrated, the lock pin 154 includes a lock pin body 154a and a spring 154b configured to press the lock pin body 154a against the housing 152a. The lock pin 154 is configured such that the lock pin body 154a is fit in a groove 158 formed in the housing 152a by the spring force of the spring 154b at the most delayed position of the angle of the intake cam shaft 129. This causes the vane 152b to be fixed to the housing 152a (i.e. , locks the intake cam shaft 129 at the most delayed position). The lock pin 154 is also configured such that the lock pin body 154a fit in the groove 158 is drawn out of the groove 158 (i.e., to release the lock of the intake camshaft 129 at the most delayedposition) by applying a hydraulic pressure that exceeds the spring force of the spring 154b, via an oil passage 159.

The hydraulic pressure to be applied to the advance chamber and the retard chamber of the WVT controller 152 and the hydraulic pressure applied to draw the lock pin body 154a out of the groove 158 (i.e., the hydraulic pressure applied to release the lock of the intake cam shaft 129 at the most delayed position) are applied by rotation of a mechanical pump 23. The mechanical pump 23 is driven by rotation of the crankshaft 26 of the engine 22.

This engine 22 is operated and controlled by an engine electronic control unit (hereinafter referred to as engine ECU) 24. The engine ECU 24 is implemented by a CPU-based microprocessor and includes a ROM that stores processing programs, a RAM that temporarily stores data, input and output ports and a communication port other than the CPU, although not being illustrated. The engine ECU 24 inputs, via its input port, signals required for operation control of the engine 22 from various sensors. The signals from various sensors include, for example, a crank angle $\theta cr$ from a crank position sensor 140 configured to detect the rotational position of the crankshaft 26, a cooling water temperature Tw from a water temperature sensor 142 configured to detect the temperature of cooling water of the engine 22, cam angles $\theta ci$ and $\theta co$ from a cam position sensor 144 configured to detect the rotational position of the intake cam shaft 129 that opens and closes the intake valve 128 and the rotational position of an exhaust cam shaft that opens and closes an exhaust valve, a throttle position TH from a throttle valve position sensor 146 configured to detect the position of the throttle valve 124, an intake air flow Qa from an air flow meter 148 mounted to an intake pipe, an intake air temperature Ta from a temperature sensor 149 mounted to the intake pipe, an intake pressure Pin from an intake pressure sensor 170 configured to detect the internal pressure in the intake pipe, a conversion catalyst temperature Tc from a temperature sensor 134b configured to detect the temperature of the conversion catalyst 134a in the catalytic converter 134, an air-fuel ratio AF from an air-fuel ratio sensor 135a, an oxygen signal 02 from an oxygen sensor 135b, a knock signal Ks from a knock sensor 172 mounted to a cylinder block and configured to detect a vibration generated by knocking, and an EGR valve position EV from an EGR valve position sensor 185 configured to detect the position of the EGR valve 184. The engine ECU 24 outputs, via its output port, various control signals for operation control of the engine 22. The various control signals include, for example, a driving signal to a throttle motor 136 configured to adjust the position of the throttle valve 124, a driving signal to the fuel injection valve 126, a control signal to an ignition coil 138 integrated with an igniter, a control signal to the variable valve timing mechanism 150 configured to vary the open-close timing of the intake valve 128 and a driving signal to the stepping motor 183 configured to adjust the position of the EGR valve 184. The engine ECU 24 is connected with the HVECU 70 via the respective communication ports to perform operation control of the engine 22 in response to control signals from the HVECU 70 and output data regarding the operating conditions of the engine 22 to the HVECU 70 as appropriate. The engine ECU 24 computes the rotation speed of the crankshaft 26 or, in other words, a rotation speed Ne of the engine 22, based on the crank angle $\theta cr$. The engine ECU 24 also computes the open-close timing VT of the intake valve 128, based on an angle ($\theta ci - \theta cr$) that shows the difference between the cam angle $\theta ci$ of the intake cam shaft 129 of the intake valve 128 and the crank angle $\theta cr$.

The planetary gear 30 is configured as a single pinion-type planetary gear mechanism. The planetary gear 30 includes a sun gear that is connected with a rotor of the motor MG1. The planetary gear 30 also includes a ring gear that is connected with a driveshaft 36 linked with drive wheels 38a and 38b via a differential gear 37. The planetary gear 30 also includes a carrier that is connected with the crankshaft 26 of the engine 22.

The motor MG1 is configured, for example, as a synchronous motor generator and includes the rotor that is connected with the sun gear of the planetary gear 30 as described above. The motor MG2 is also configured, for example, as a synchronous motor generator and includes a rotor that is connected with the driveshaft 36. The motors MG1 and MG2 are rotated and driven by switching control of switching elements (not shown) of the inverters 41 and 42 by a motor electronic control unit (hereinafter referred to as motor ECU) 40.

The motor ECU 40 is implemented by a CPU-based microprocessor and includes a ROM that stores processing programs, a RAM that temporarily stores data, input and output ports and a communication port other than the CPU, although not being illustrated. The motor ECU 40 inputs, via its input port, signals required for drive control of the motors MG1 and MG2 from various sensors. The signals from various sensors include, for example, rotational positions θm1 and θm2 from rotational position detection sensors 43 and 44 configured to detect the rotational positions of the rotors of the motors MG1 and MG2 and phase currents from current sensors configured to detect electric currents flowing through the respective phases of the motors MG1 and MG2. The motor ECU 40 outputs, via its output port, for example, switching control signals to the switching elements (not shown) of the inverters 41 and 42. The motor ECU 40 is connected with the HVECU 70 via the respective communication ports to perform drive control of the motors MG1 and MG2 in response to control signals from the HVECU 70 and output data regarding the operating conditions of the motors MG1 and MG2 to the HVECU 70 as appropriate. The motor ECU 40 computes rotation speeds Nm1 and Nm2 of the motors MG1 and MG2 based on the rotational positions θm1 and θm2 of the rotors of the motors MG1 and MG2 detected by the rotational position detection sensors 43 and 44.

The battery 50 is configured, for example, as a lithium ion secondary battery or a nickel hydride secondary battery to transmit electric power to and from the motors MG1 and MG2 via the inverters 41 and 42. This battery 50 is under management of a battery electronic control unit (hereinafter referred to as battery ECU) 52.

The battery ECU 52 is implemented by a CPU-based microprocessor and includes a ROM that stores processing programs, a RAM that temporarily stores data, input and output ports and a communication port other than the CPU, although not being illustrated. The battery ECU 52 inputs, via its input port, signals required for management of the battery 50 from various sensors. The signals from various sensor include, for example, a battery voltage Vb from a voltage sensor located between terminals of the battery 50, a battery current Ib from a current sensor mounted to an output terminal of the battery 50, and a battery temperature Tb from a temperature sensor mounted to the battery 50. The battery ECU 52 is connected with the HVECU 70 via the respective communication ports to output data regarding the conditions of the battery 50 to the HVECU 70 as appropriate. With a view to managing the battery 50, the battery ECU 52 computes a state of charge SOC based on an integrated value of the battery current Ib, and computes input and output limits Win and Wout based on the computed state of charge SOC and the battery temperature Tb. The input and output limits Win and Wout denote maximum allowable electric powers chargeable into and dischargeable from the battery 50.

The HVECU 70 is implemented by a CPU-based microprocessor and includes a ROM that stores processing programs, a RAM that temporarily stores data, input and output ports and a communication port other than the CPU, although not being illustrated. The HVECU 70 inputs, via its input port, signals from various sensors. The signals from various sensors include, for example, an ignition signal from an ignition switch 80, a shift position SP from a shift position sensor 82 configured to detect the operational position of a shift lever 81, an accelerator position Acc from an accelerator pedal position sensor 84 configured to detect the depression amount of an accelerator pedal 83, a brake pedal position BP from a brake pedal position sensor 86 configured to detect the depression amount of a brake pedal 85, and a vehicle speed V from a vehicle speed sensor 88. As described above, the HVECU 70 is connected with the engine ECU 24, the motor ECU 40 and the battery ECU 52 via the communication ports to transmit various control signals and data to and from the engine ECU 24, the motor ECU 40 and the battery ECU 52.

The hybrid vehicle 20 of the embodiment having the above configuration runs in an electric drive mode (EV drive mode) driven without operation of the engine 22 and in a hybrid drive mode (HV drive mode) driven with operation of the engine 22.

During run in the EV drive mode, the HVECU 70 first sets a torque demand Tr* required for running (to be output to the driveshaft 36), based on the accelerator position Acc from the accelerator pedal position sensor 84 and the vehicle speed V from the vehicle speed sensor 88. The HVECU 70 subsequently sets a torque command Tm1* of the motor MG1 to value 0, and sets a torque command Tm2* of the motor MG2 such as to output the torque demand Tr* to the driveshaft 36 in a range of the input limit Win and the output limit Wout of the battery 50. The HVECU 70 sends the torque commands Tm1* and Tm2* of the motors MG1 and MG2 to the motor ECU 40. When receiving the torque commands Tm1* and Tm2* of the motors MG1 and MG2 , the motor ECU 40 performs switching control of the switching elements of the inverters 41 and 42 such as to drive the motors MG1 and MG2 with the torque commands Tm1* and Tm2*.

During run in the HV drive mode, on the other hand, the HVECU 70 first sets the torque demand Tr* required for running (to be output to the driveshaft 36), based on the accelerator position Acc from the accelerator pedal position sensor 84 and the vehicle speed V from the vehicle speed sensor 88. The HVECU 70 subsequently multiplies the set torque demand Tr* by a rotation speed Nr of the driveshaft 36 to calculate a driving power Pdrv* required for running. The rotation speed Nr of the driveshaft 36 may be the rotation speed Nm2 of the motor MG2 or a rotation speed obtained by multiplying the vehicle speed V by a conversion efficiency.

The HVECU 70 subsequently determines whether warm-up of the conversion catalyst 134 is required. This determination is based on the setting of a catalyst warm-up flag Fc. The catalyst warm-up flag Fc is input from the engine ECU 24 by communication. The engine ECU 24 performs a flag setting routine (not shown) to set the catalyst warm-up flag Fc. In the flag setting routine, the engine ECU 24 first inputs the catalyst temperature Tc detected by the temperature sensor 134b. When the input catalyst temperature Tc is lower than an activation temperature Tcact of the conversion catalyst 134a (for example, 400°C, 420°C or 450°C), the engine ECU 24 determines that warm-up of the conversion catalyst 134a is required and sets the catalyst warm-up flag Fc to value 1. When the input catalyst temperature Tc is equal to or higher than the activation temperature Tcact, on the other hand, the engine ECU 24 determines that warm-up of the conversion catalyst 134a is not required and sets the catalyst warm-up flag Fc to value 0.

When warm-up of the conversion catalyst 134a is not required, the HVECU 70 subtracts a charge-discharge power demand Pb* of the battery 50 (that takes a positive value in the case of discharging from the battery 50) from the driving power Pdrv* to set a power demand Pe* of the engine 22. The HVECU 70 subsequently sets a required rotation speed Netag of the engine 22 using an operation line (for example, fuel consumption-optimizing operation line). The operation line defines a relationship between the power demand Pe* and the required rotation speed Netag such as to enable the power demand Pe* to be output from the engine 22 with high efficiency.

When warm-up of the conversion catalyst 134a is required, the HVECU 70 sets a specified power Pec suitable for warm-up of the conversion catalyst 134a to the power demand Pe* of the engine 22, and sets a specified rotation speed Nec suitable for warm-up of the conversion catalyst 134a to the required rotation speed Netag. The specified power Pec is, for example, 1 kW, 2 kW or 3 kW. The specified rotation speed Nec is, for example, 1000 rpm, 1200 rpm or 1400 rpm.

After setting the power demand Pe* and the required rotation speed Netag of the engine 22, the HVECU 70 sets the torque commands Tm1* and Tm2* of the motors MG1 and MG2 in the range of the input and output limits Win and Wout of the battery 50. The torque command Tm1* is set such that the rotation speed Ne of the engine 22 approaches the required rotation speed Netag by rotation speed feedback control. The torque command Tm2* is set by subtracting a torque (-Tm1*/ρ) from the torque demand Tr*. The torque (-Tm1*/ρ) denotes a torque that is output from the motor MG1 and is applied to the driveshaft 36 via the planetary gear 30 when the motor MG1 is driven with the torque command Tm1*.

The HVECU 70 sends the power demand Pe* and the required rotation speed Netag of the engine 22 to the engine ECU 24, while sending the torque commands Tm1* and Tm2* of the motors MG1 and MG2 to the motor ECU 40. When receiving the power demand Pe* and the required rotation speed Netag of the engine 22, the engine ECU 24 performs intake air flow control, fuel injection control, ignition control and open-close timing control of the engine 22 such as to operate the engine 22 based on the power demand Pe* and the required rotation speed Netag of the engine 22. When receiving the torque commands Tm1* and Tm2* of the motors MG1 and MG2, the motor ECU 40 performs switching control of the switching elements of the inverters 41 and 42 such as to drive the motors MG1 and MG2 with the torque commands Tm1* and Tm2*.

The following describes operation control of the engine 22. The engine ECU 24 first divides the power demand Pe* of the engine 22 received from the HVECU 70 by the required rotation speed Netag of the engine 22 also received from the HVECU 70 to calculate a required torque Tetag of the engine 22. The engine ECU 24 subsequently divides the required torque Tetag by a required efficiency ηtag to calculate a target torque Te* of the engine 22. The required efficiency ηtag is defined as a value obtained by dividing the required torque Tetag by a torque of the engine 22 at an ignition timing IT of the engine 22 set to an optimum ignition timing MBT (minimum advance for best torque). When warm-up of the conversion catalyst 134a is not required, the required efficiency ηtag is set to value 1. When warm-up of the conversion catalyst 134a is required, on the other hand, the required efficiency ηtag is set to a value smaller than 1. Accordingly, when warm-up of the conversion catalyst 134a is not required, the target torque Te* is equal to the required torque Tetag. When warm-up of the conversion catalyst 134a is required, on the other hand, the target torque Te* is larger than the required torque Tetag.

The engine ECU 24 subsequently sets a target throttle position TH*, a target fuel injection amount Qf*, a target ignition timing IT* and a target open-close timing VT* of the intake valve 128, based on the required torque Tetag and the target torque Te*. The target throttle position TH* is a target value of intake air flow control of the engine 22. The target fuel injection amount Qf* is a target value of fuel injection control of the engine 22. The target ignition timing IT* is a target value of ignition control of the engine 22. The target open-close timing VT* is a target value of open-close timing control of the engine 22.

The description is first on the assumption that the required efficiency ηtag is equal to the value 1 or, in other words, that the target torque Te* is equal to the required torque Tetag. In this state, the minimum advance for best torque MBT is set to the target ignition timing IT*. The target throttle position TH*, the target fuel injection amount Qf* and the target open-close timing VT* are set based on this target ignition timing IT* (minimum advance for best torque MBT) such as to enable the target torque Te* to be output from the engine 22. According to the embodiment, the engine ECU 24 sets a most delayed timing to the target open-close timing VT* until elapse of a predetermined time duration tun since completion of a start of the engine 22, and sets the target throttle position TH* and the target fuel injection amount Qf* according to the target ignition timing IT* (minimum advance for best torque MBT), the target open-close timing VT* (most delayed timing) and the target torque Te*. The predetermined time duration tun denotes a time duration required to release the lock of the intake cam shaft 129 at the most delayed position. After elapse of the predetermined time duration tun since completion of a start of the engine 22 , the target throttle position TH*, the target fuel injection amount Qf* and the target open-close timing VT* are set according to the target ignition timing IT* (minimum advance for best torque MBT) and the target torque Te*.

The description is then on the assumption that the required efficiency ηtag is smaller than the value 1 or, in other words, that the target torque Te* is larger than the required torque Tetag. In this state, the target throttle position TH*, the target fuel injection amount Qf* and the target open-close timing VT* are set based on the minimum advance for best torque MBT such as to enable the target torque Te* to be output from the engine 22. According to this embodiment, in the same manner as described above, the engine ECU 24 sets the target throttle position TH*, the target fuel injection amount Qf* and the target open-close timing VT* according to whether the predetermined time duration tun has elapsed since completion of a start of the engine 22. In this case, the target throttle position TH* and the other target values are set to larger values than those corresponding to the required torque Tetag. The engine ECU 24 subsequently sets the target ignition timing IT* based on the target throttle position TH*, the target fuel injection amount Qf* and the target open-close timing VT* such as to enable the required torque Tetag to be output from the engine 22. Since the target throttle position TH* and the other target values are set to larger values than those corresponding to the required torque Tetag, the target ignition timing IT* is set to a delayed timing from the minimum advance for best torque MBT. The delayed amount of the target ignition timing IT* is increased with a decrease in required efficiency ηtag or, in other words, with an increase in target torque Te* relative to the required torque Tetag.

After setting the target throttle position TH*, the target fuel injection amount Qf*, the target ignition timing IT* and the target open-close timing VT*, the engine ECU 24 performs operation control of the engine 22 (intake air flow control, fuel injection control, ignition control and open-close timing control) based on the settings. The intake air flow control drives and controls the throttle motor 136 such as to make the throttle position TH approach the target throttle position TH*. The fuel injection control drives and controls the fuel inj ection valve 126 such as to perform fuel injection with the target fuel injection amount Qf*. The ignition control drives and controls the ignition coil 138 such as to make ignition at the target ignition timing IT*. The open-close timing control drives and controls the variable valve timing mechanism 150 such as to make the open-close timing VT of the intake valve 128 approach the target open-close timing VT*. When warm-up of the conversion catalyst 134a is required, the ignition timing IT of the engine 22 is set to the delayed timing from the minimum advance for best torque MBT, so as to accelerate warm-up of the conversion catalyst 134a.

The following describes the operations of the hybrid vehicle 20 of the embodiment having the above configuration or more specifically the operations of the hybrid vehicle 20 to set the required efficiency ηtag. Fig. 7 is a flowchart showing an exemplary required efficiency setting routine performed by an engine ECU 24 of the embodiment. This routine is repeated at predetermined time intervals (for example, at every msec).

On start of the required efficiency setting routine, the engine ECU 24 first inputs data, for example, the cooling water temperature Tw, the open-close timing VT of the intake valve 128 and the catalyst warm-up flag Fc (step S100). The cooling water temperature Tw input here is a value detected by the water temperature sensor 142. The open-close timing VT of the intake valve 128 input here is a value calculated from the angle (θci - θcr) that shows the difference between the cam angle θci of the intake cam shaft 129 of the intake valve 128 and the crank angle θcr. The crank angle θcr used is a value detected by the crank position sensor 140, and the cam angle θci used is a value detected by the cam position sensor 144. The catalyst warm-up flag Fc input here is a value set by the flag setting routine described above.

After the data input, the engine ECU 24 checks the value of the input catalyst warm-up flag Fc (step S110). When the catalyst warm-up flag Fc is the value 0, i.e. , when warm-up of the conversion catalyst 134a is not required, the engine ECU 24 sets the required efficiency ηtag to value 1 (step S120) and terminates this routine. After setting the required efficiency ηtag, the engine ECU 24 divides the required torque Tetag by the set required efficiency ηtag to set the target torque Te*. Subsequently the engine ECU 24 uses the required torque Tetag and the target torque Te* to set the target throttle position TH*, the target fuel injection amount Qf*, the target ignition timing IT* and the target open-close timing VT*. The engine ECU 24 then uses the target throttle position TH*, the target fuel injection amount Qf*, the target ignition timing IT* and the target open-close timing VT* to perform operation control of the engine 22. The details have been described above. In this state, the target torque Te* is equal to the required torque Tetag. Accordingly the minimum advance for best torque MBT is set to the target ignition timing IT*.

When the catalyst warm-up flag Fc is the value 1 at step S110, i.e. , when warm-up of the conversion catalyst 134a is required, on the other hand, the engine ECU 24 sets a predetermined value η1 smaller than the value 1 (for example, 0.4, 0.5 or 0.6) to a tentative required efficiency ηtmp as a temporary value of the required efficiency ηtag (step S130).

The engine ECU 24 subsequently sets a guard value ηgd based on the open-close timing VT of the intake valve 128 and the cooling water temperature Tw (step S140). The engine ECU 24 then limits the tentative required efficiency ηtmp with the guard value ηgd (applies a lower limit guard) to set a guarded value ηmd according to Equation (1) given below (step S150). The engine ECU 24 subsequently processes the guarded value ηmd by a rating process to set the required efficiency ηtag according to Equation (2) given below (step S160) and terminates this routine. The rating process sets the smaller between the guarded value ηmd and a value (previous ηtag - ηlim) obtained by subtracting a rating value ηlim from the previous required efficiency (previous ηtag) to the required efficiency ηtag. After setting the required efficiency ηtag, the engine ECU 24 divides the required torque Tetag by the set required efficiency ηtag to set the target torque Te*. Subsequently the engine ECU 24 uses the required torque Tetag and the target torque Te* to set the target throttle position TH*, the target fuel injection amount Qf*, the target ignition timing IT* and the target open-close timing VT*. The engine ECU 24 then uses the target throttle position TH*, the target fuel injection amount Qf*, the target ignition timing IT* and the target open-close timing VT* to perform operation control of the engine 22. In this case, the target torque Te* is larger than the required torque Tetag, and the target throttle position TH* and the other target values are set to larger values than those corresponding to the required torque Tetag. Accordingly, the target ignition timing IT* is set to a delayed timing from the minimum advance for best torque MBT. The delayed amount of the target ignition timing IT* is increased with a decrease in required efficiency ηtag or, in other words, with an increase in target torque Te* relative to the required torque Tetag.

$$\eta md = \max(\eta tmp,\ \eta gd) \qquad (1)$$

$$\eta tag = \max(\eta md,\ \text{previous } \eta tag - \eta lim) \qquad (2)$$

The guard value ηgd is used to limit a decrease amount of the required efficiency ηtag and thereby limit the delayed amount of the target ignition timing IT*. According to this embodiment, a procedure of setting the guard value ηgd obtains and stores in advance a relationship between the guard value ηgd and the open-close timing VT of the intake valve 128 with regard to the cooling water temperature Tw in the form of a guard value setting map in the ROM (not shown), and reads and sets the guard value ηgd corresponding to the given open-close timing VT of the intake valve 128 and the given cooling water temperature Tw from the stored map. One example of the guard value setting map is shown in Fig. 8. As illustrated, the guard value ηgd is set in a range of not less than a predetermined value η1 and less than the value 1. This allows the target ignition timing IT* to be set to the delayed timing from the minimum advance for best torque MBT. The guard value ηgd is also set to increase with an increase in delay of the open-close timing VT. This is because an increase in delayed amount of the target ignition timing IT* causes more unstable combustion in the engine 22 at the more delayed open-close timing of the intake valve 128. Additionally, the guard value ηgd is set to increase with a decrease in cooling water temperature Tw (i.e. , a decrease in internal temperature of the combustion chamber in the engine 22). This is because an increase in delayed amount of the target ignition timing IT* causes more unstable combustion in the engine 22 at the lower cooling water temperature Tw. The unstable combustion in the engine 22 is likely to increase an output variation of the engine 22. The large output variation of the engine 22 may cause rattling-induced abnormal noise in, for example, the planetary gear 30 connected with the engine 22. By taking into account this likelihood, as shown in Fig. 8, this embodiment sets the guard value ηgd to increase with an increase in delay of the open-close timing VT of the intake valve 128 and to increase with a decrease in cooling water temperature Tw, and sets the required efficiency ηtag in the range having the guard value ηgd as the lower limit. This decreases the delayed amount of the target ignition timing IT* with an increase in delay of the open-close timing VT of the intake valve 128, and also decreases the delayed amount of the target ignition timing IT* with a decrease in cooling water temperature Tw. As a result, this suppresses a relatively large delayed amount of the target ignition timing IT* from being set at a relatively large delayed amount of the open-close timing VT of the intake valve 128 (for example, at the most delayed open-close timing VT). This also suppresses a relatively large delayed amount of the target ignition timing IT* from being set at a relatively low cooling water temperature Tw. Such control suppresses unstable combustion in the engine 22. As a result, this suppresses an increase in output variation of the engine 22 and suppresses the rattling-induced abnormal noise in, for example, the planetary gear 30.

The required efficiency ηtag is set by processing the guarded value ηmd by the rating process. This suppresses an abrupt change of the required efficiency ηtag and thereby an abrupt change of the ignition timing IT. The rating value ηlim may be set to such a value that does not adversely affect combustion in the engine 22, based on, for example, the specifications of the engine 22.

Fig. 9 is a diagram showing one example of time changes in tentative required efficiency ηtmp, guard value ηgd, required efficiency ηtag, target ignition timing IT* and target open-close timing VT* and open-close timing VT of the intake valve 128 when warm-up of the conversion catalyst 134a is required after a start of the engine 22. In this diagram, with regard to the required efficiency ηtag and the target ignition timing IT*, solid-line curves show the embodiment, and broken-line curves show a comparative example. In the comparative example, the required efficiency ηtag is set without using the guard value ηgd. In other words, the required efficiency ηtag is set without using Equation (1) given above and with using "ηtmp" instead of "ηmd" in the right side of Equation (2) given above. Time t1 indicates a timing when a start of the engine 22 is completed, and time t2 indicates a timing after elapse of the predetermined time duration tun since completion of the start of the engine 22.

As illustrated, with regard to both the embodiment and the comparative example, until the time t1, the required efficiency ηtag is set to the value 1, and the minimum advance for best torque MBT is set to the target ignition timing IT*. With regard to the comparative example, after the time t1, the required efficiency ηtag is set without using the guard value ηgd. The required efficiency ηtag then varies from the value 1 to the relatively small tentative required efficiency ηtmp (predetermined value η1), and accordingly, the target ignition timing IT* changes from the minimum advance for best torque MBT to a relatively large delayed timing. Until the time t2, the open-close timing VT of the intake valve 128 is set to the most delayed timing. Setting a relatively large delayed amount of the target ignition timing IT* is thus likely to cause unstable combustion in the engine 22. The unstable combustion in the engine 22 is likely to increase the output variation of the engine 22 and may cause rattling-induced abnormal noise in, for example, the planetary gear 30 connected with the engine 22.

With regard to the embodiment, on the other hand, after the time t1, the required efficiency ηtag is set using the guard value ηgd that tends to increase with an increase in delay of the open-close timing VT of the intake valve 128. Until the time t2, the open-close timing VT of the intake valve 128 is set to the most delayed timing, so that a relatively large value (value relatively close to the value 1) is set to the guard value ηgd. The required efficiency ηtag then varies to the guard value ηgd that is larger than the tentative required efficiency ηtmp, and accordingly, the target ignition timing IT* is changed to the delayed timing from the minimum advance for best torque MBT and to the more delayed timing than the timing of the comparative example. This suppresses a relatively large delayed amount of the target ignition timing IT* from being set at the open-close timing VT of the intake valve 128 set to the most delayed timing and thereby suppresses unstable combustion in the engine 22. As a result, this suppresses an increase in output variation of the engine 22 and suppresses the rattling-induced abnormal noise in, for example, the planetary gear 30. After the tie t2, the open-close timing of the intake valve 128 is shifted to advance. This results in decreasing the guard value ηgd, decreasing the required efficiency ηtag and further delaying the target ignition timing IT*. This further accelerates warm-up of the conversion catalyst 134a.

As described above, in the case where warm-up of the conversion catalyst 134a in the catalytic converter 134 is required, the hybrid vehicle 20 of the embodiment delays the ignition timing IT of the engine 22, compared with the ignition timing IT in the case where warm-up of the conversion catalyst 134a is not required. This accelerates warm-up of the conversion catalyst 134a. The delayed amount of the ignition timing IT is decreased with an increase in delay of the open-close timing VT of the intake valve 128. This suppresses a relatively large delayed amount of the target ignition timing IT* from being set at the relatively large delayed amount of the open-close timing VT of the intake valve 128 (for example, at the open-close timing VT set to the most delayed timing). This suppresses unstable combustion in the engine 22 and an increase in output variation of the engine 22. As a result, this suppresses the rattling-induced abnormal noise in, for example, the planetary gear 30.

When warm-up of the conversion catalyst 134a in the catalytic converter 134 is required, the hybrid vehicle 20 of the embodiment decreases the delayed amount of the ignition timing IT with a decrease in cooling water temperature Tw, while decreasing the delayed amount of the ignition timing IT with an increase in delay of the open-close timing VT of the intake valve 128. This further suppresses unstable combustion in the engine 22.

The hybrid vehicle 20 of the embodiment sets the guard value ηgd using the open-close timing VT of the intake valve 128 and the cooling water temperature Tw, when warm-up of the conversion catalyst 124a is required. One modification may set the guard value ηgd only according to the open-close timing VT of the intake valve 128 without using the cooling water temperature Tw.

The hybrid vehicle 20 of the embodiment applies the lower limit guard to the tentative required efficiency ηtmp (predetermined value η1) with the guard value ηgd to set the guarded value ηmd, and processes the set guarded value ηmd by the rating process to set the required efficiency ηtag. One modification may process the tentative required efficiency ηtmp by the rating process to set a rated value ηrt and apply the lower limit guard to the rated value ηrt with the guard value ηgd to set the required efficiency ηtag.

When warm-up of the conversion catalyst 134a is required, the hybrid vehicle 20 of the embodiment applies the lower limit guard to the tentative required efficiency ηtmp (predetermined value η1) with the guard value ηgd, which is based on the open-close timing VT of the intake valve 128 and the cooling water temperature Tw, to set the guarded value ηmd and sets the required efficiency ηtag using the set guarded value ηmd. One modification may set the required efficiency ηtag without using the tentative required efficiency ηtmp (predetermined value η1), i.e., by using the guard value ηgd as the guarded value ηmd.

The hybrid vehicle 20 of the embodiment processes the guarded value ηmd by the rating process to set the required efficiency ηtag. One modification may process the guarded value ηmd by a gradual change process other than the rating process, for example, smoothing process, to set the required efficiency ηtag. Another modification may set the guarded value ηmd to the required efficiency ηtag without processing the guarded value ηmd by any gradual change process.

The hybrid vehicle 20 of the embodiment sets the target ignition timing IT* based on the required efficiency ηtag. One modification may set the target ignition timing IT* without using the required efficiency ηtag. In this modification, when warm-up of the conversion catalyst 134a is not required, the target ignition timing IT* may be set in the same manner as described in the embodiment. When warm-up of the conversion catalyst 134a is required, on the other hand, the delayed amount of the target ignition timing IT* may be decreased with an increase in delay of the open-close timing VT of the intake valve 128 as shown in Fig. 10. The target throttle position TH* and the other target values may be set, such as to enable the required torque Tetag to be output from the engine 22 using the target ignition timing IT*.

Although not being specifically described in the above embodiment, the hybrid vehicle 20 of the embodiment may be configured to gradually vary the required efficiency ηtag toward the value 1 by a gradual change process such as rating process or smoothing process on completion of warm-up of the conversion catalyst 134a.

In the hybrid vehicle 20 of the embodiment, the power from the motor MG2 is output to the driveshaft 36 linked with the drive wheels 38a and 38b. As illustrated in a hybrid vehicle 120 according to one modification shown in Fig. 11, however, the power from the motor MG2 may be output to another axle (axle linked with wheels 39a and 39b shown in Fig. 11) that is different from an axle linked with the drive wheels 38a and 38b.

In the hybrid vehicle 20 of the embodiment, the power from the engine 22 is output via the planetary gear 30 to the driveshaft 36 linked with the drive wheels 38a and 38b. As illustrated in Fig. 12, however, a hybrid vehicle 220 according to another modification may be equipped with a pair-rotor motor 230 that includes an inner rotor 232 connected with a crankshaft of the engine 22 and an outer rotor 234 connected with the driveshaft 36 linked with the drive wheels 38a and 38b. The pair-rotor motor 230 transmits part of the power from the engine 22 to the driveshaft 36, while converting the remaining power to electric power.

In the hybrid vehicle 20 of the embodiment, the power from the engine 22 is output via the planetary gear 30 to the driveshaft 36 linked with the drive wheels 38a and 38b, while the power from the motor MG2 is output to the driveshaft 36. As illustrated in a hybrid vehicle 320 according to another modification shown in Fig. 13, however, a motor MG may be connected via a transmission 330 with the driveshaft 36 that is linked with the drive wheels 38a and 38b, and an engine 22 may be connected via a clutch 329 with a rotating shaft of the motor MG. This configuration causes the power from the engine 22 to be output to the driveshaft 36 via the rotating shaft of the motor MG and the transmission 330, while causing the power from the motor MG to be output to the driveshaft 36 via the transmission 330. As illustrated in a hybrid vehicle 420 according to another modification shown in Fig. 14, the power from the engine 22 may be output via a transmission 430 to an axle linked with the drive wheels 38a and 38b, while the power from the motor MG may be output to another axle (axle linked with wheels 39a and 39b shown in Fig. 14) that is different from the axle linked with the drive wheels 38a and 38b.

The embodiment describes the configuration of the hybrid vehicle 20 that runs with the power from the engine 22 and the power from the motor MG2. The invention may also be applicable to another configuration of an automobile that is not equipped with a motor for running and runs with only the power from the engine 22.

In the automobile of the above aspect, when the catalyst is warmed up, the controller may set a command value that is used for setting the ignition timing, to a value that is within a range of less than a predetermined value and tends to increase with an increase in delay of the open-close timing, and may increase the delayed amount of the ignition timing with a decrease in command value relative to the predetermined value. Setting the command value suppresses a relatively large delayed amount of the ignition timing from being set at a relatively large delayed amount of the open-close timing of the intake valve. The controller may set a predetermined value to the command value in the case where the catalyst is not warmed up.

In the automobile of the above aspect that uses the command value to set the ignition timing, when the catalyst is warmed up, the controller may set a tentative command value to a second predetermined value that is less than the predetermined value, set a guard value to a value that is within the range of less than the predetermined value and tends to increase with an increase in delay of the open-close timing, and set the command value based on a guarded value that is obtained by applying lower limit guard to the tentative command value with the guard value. Setting the guard value suppresses a relatively small command value from being set and thereby suppresses a relatively large delayed amount of the ignition timing from being set at a relatively large delayed amount of the open-close timing of the intake valve.

Further, in the automobile of the above aspect that uses the command value to set the ignition timing, the controller may gradually change the command value when the controller changes the command value. This suppresses an abrupt change of the command value and thereby an abrupt change of the ignition timing. Gradually changing the command value means gradually changing the command value by rating process, smoothing process or the like.

Furthermore, in the automobile of the above aspect that uses the command value to set the ignition timing, the controller may increase an opening of a throttle valve when the command value is less than the predetermined value, compared with an opening of the throttle valve when the command value is equal to the predetermined value. The ignition timing is delayed when the command value is less than the predetermined value, compared with the ignition timing when the command value is equal to the predetermined value. At a fixed position or opening of the throttle valve, this reduces the torque of the engine. Such adjustment of the opening of the throttle valve suppresses a decrease in output of the engine.

In the automobile of the present invention, when the catalyst is warmed up, the controller may decrease the delayed amount of the ignition timing with an increase in delay of the open-close timing, and may also decrease the delayed amount of the ignition timing with a decrease in temperature of the engine. The lower temperature of the engine is more likely to cause unstable combustion in the engine. Controlling the ignition timing in the above tendency further suppresses unstable combustion in the engine.

Further, in the automobile of the present invention, the automobile may further include a first motor that is configured to input and output power, a planetary gear that has three rotational elements respectively connected with a rotating shaft of the first motor, an output shaft of the engine and a driveshaft linked with the axle, and a second motor that is configured to input and output power from and to the driveshaft.

The following describes the correspondence relationship between the primary components of the embodiment and the primary components of the invention described in Summary of Invention. The engine 22 equipped with the variable valve timing mechanism 150 and the catalytic converter 134 of the embodiment corresponds to the "engine" of the invention. The engine ECU 24 that performs the required efficiency setting routine of Fig. 7 corresponds to the "controller" of the invention.

The correspondence relationship between the primary components of the embodiment and the primary components of the invention, regarding which the problem is described in Summary of Invention, should not be considered to limit the components of the invention, regarding which the problem is described in Summary of Invention, since the embodiment is only illustrative to specifically describes the aspects of the invention, regarding which the problem is described in Summary of Invention. In other words, the invention, regarding which the problem is described in Summary of Invention, should be interpreted on the basis of the description in the Summary of Invention, and the embodiment is only a specific example of the invention, regarding which the problem is described in Summary of Invention.

The aspect of the invention is described above with reference to the embodiment. The invention is, however, not limited to the above embodiment but various modifications and variations may be made to the embodiment without departing from the scope of the invention.

Industrial Applicability

The technique of the invention is preferably applicable to the manufacturing industries of the automobile and so on.

Citation List

Patent Litareture

PTL1: JP2012-197771

## Claims

1. An automobile (20,120,220,320,420), comprising
an engine (22) that includes a variable valve timing mechanism (150) configured to change an open-close timing of an intake valve (128) and is linked with an axle via a gear mechanism (37); and
a controller (24) that is configured to delay an ignition timing of the engine (22) in the case where a catalyst (134a) in an emission control apparatus (134) of the engine (22) is warmed up, compared with an ignition timing in the case where the catalyst (134a) is not warmed up, wherein
the controller (24) is configured to decrease a delayed amount of the ignition timing with an increase in delay of the open-close timing, when the catalyst (134a) is warmed up.

2. The automobile according to claim 1,
wherein when the catalyst (134a) is warmed up, the controller (24) sets a command value that is used for setting the ignition timing, to a value that is within a range of less than a predetermined value and tends to increase with an increase in delay of the open-close timing, and increases the delayed amount of the ignition timing with a decrease in command value relative to the predetermined value.

**3.** The automobile according to claim 2,
wherein when the catalyst (134a) is warmed up, the controller (24) sets a tentative command value to a second predetermined value that is less than the predetermined value, sets a guard value to a value that is within the range of less than the predetermined value and tends to increase with an increase in delay of the open-close timing, and sets the command value based on a guarded value that is obtained by applying lower limit guard to the tentative command value with the guard value.

**4.** The automobile according to claim 2,
wherein the controller (24) is configured to gradually change the command value when the controller (24) changes the command value.

**5.** The automobile according to claim 3,
wherein the controller (24) is configured to gradually change the command value when the controller (24) changes the command value.

**6.** The automobile according to claim 2,
wherein the controller (24) is configured to increase an opening of a throttle valve when the command value is less than the predetermined value, compared with an opening of the throttle valve when the command value is equal to the predetermined value.

**7.** The automobile according to claim 1,
wherein when the catalyst (134a) is warmed up, the controller (24) decreases the delayed amount of the ignition timing with an increase in delay of the open-close timing, and also decreases the delayed amount of the ignition timing with a decrease in temperature of the engine (22).

**8.** The automobile according to any one of claims 1 to 7, further comprising
a first motor (MG1) that is configured to input and output power;
a planetary gear (30) that has three rotational elements respectively connected with a rotating shaft of the first motor (MG1), an output shaft of the engine (22) and a driveshaft (36) linked with the axle; and
a second motor (MG2) that is configured to input and output power from and to the driveshaft (36).

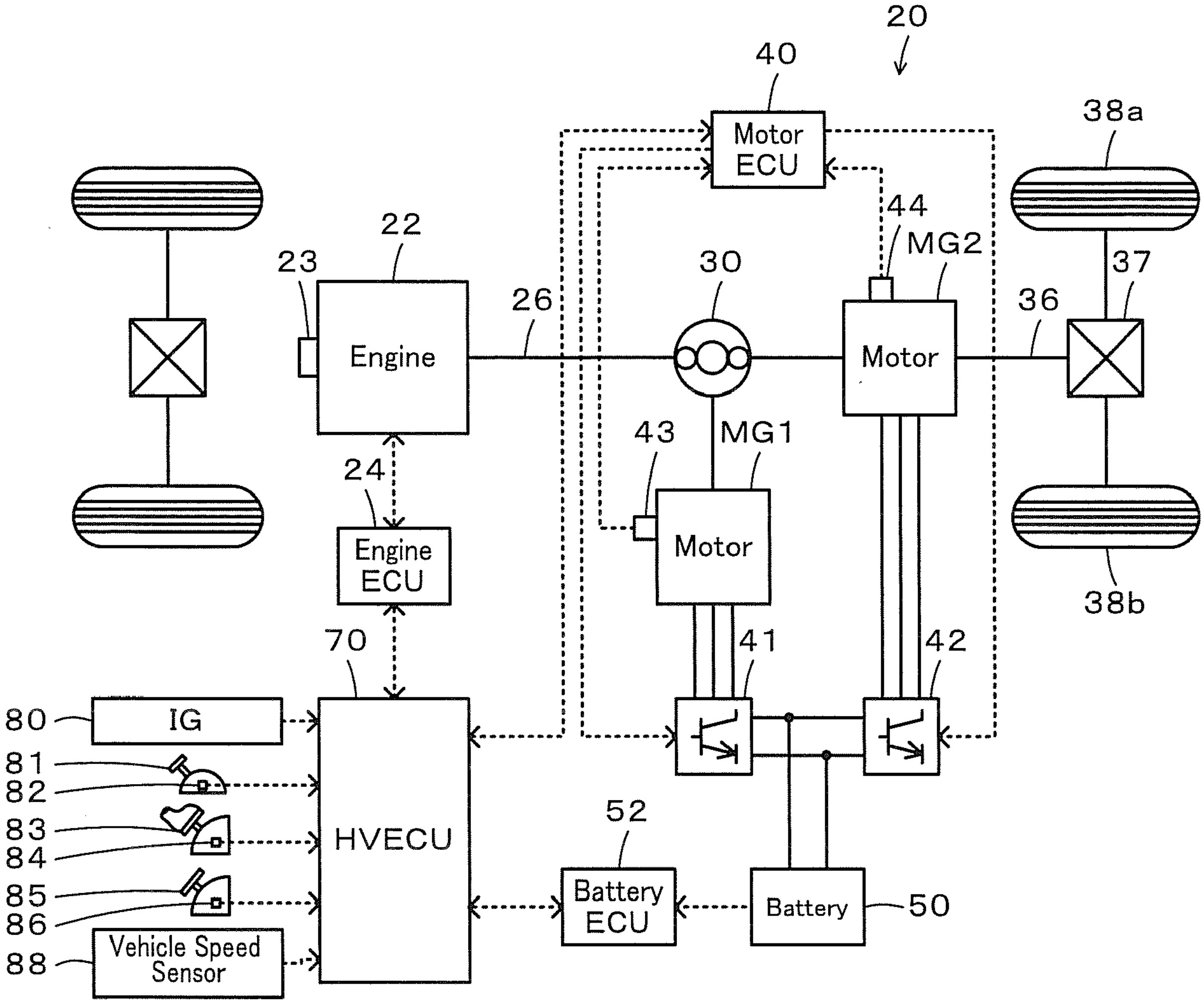
20
40
Motor ECU
38a
44
MG2
22
23
30
37
26
36
Engine
Motor
43
MG1
24
Motor
Engine ECU
38b
70
41
42
80
IG
81
82
83
HVECU
84
52
85
Battery ECU
Battery
50
86
88
Vehicle Speed Sensor

FIG. 1

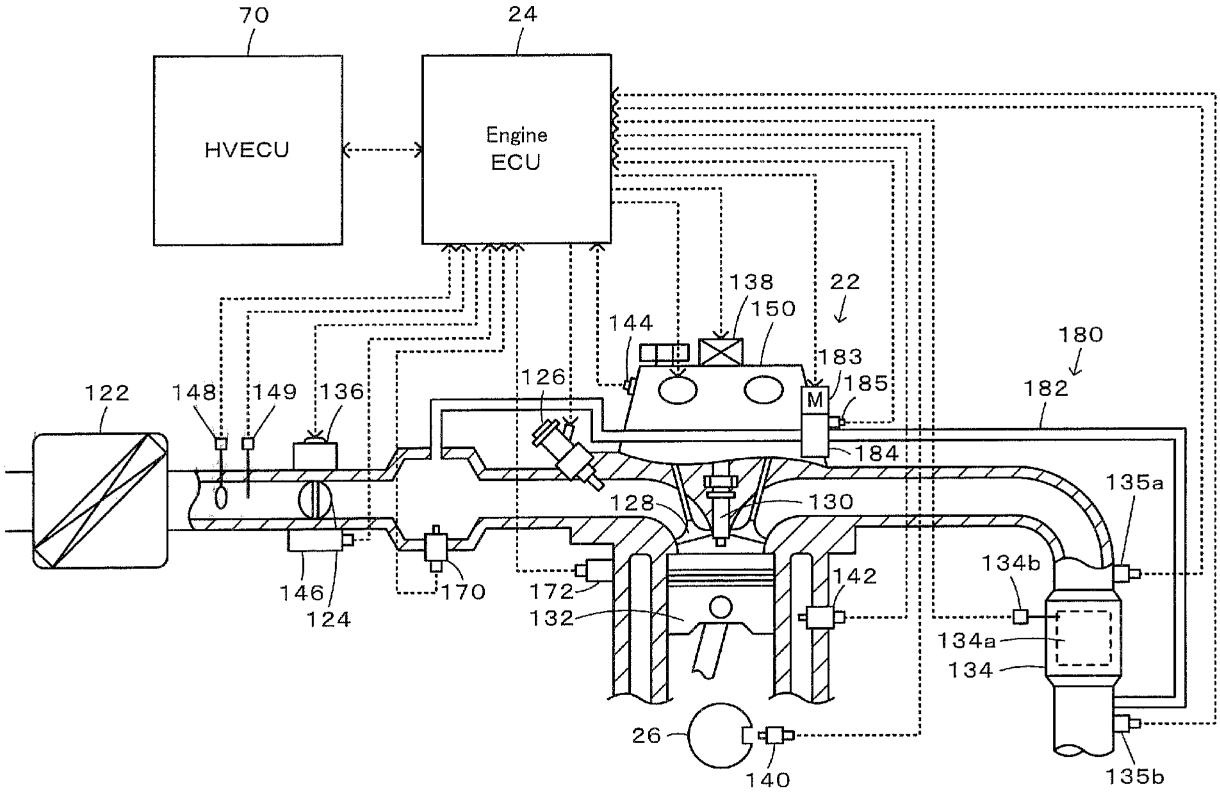
70
24
HVECU
Engine
ECU
122
148
149
136
126
144
138
150
22
183
185
180
182
184
135a
128
130
146
124
170
172
132
142
134b
134a
134
26
140
135b
M

FIG. 2

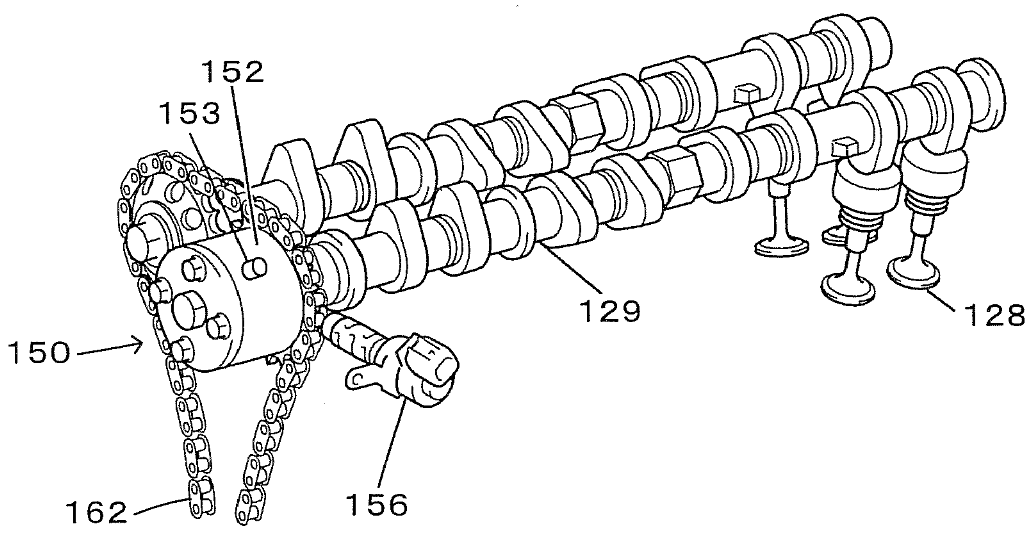
152
153
150
162
156
129
128

FIG. 3

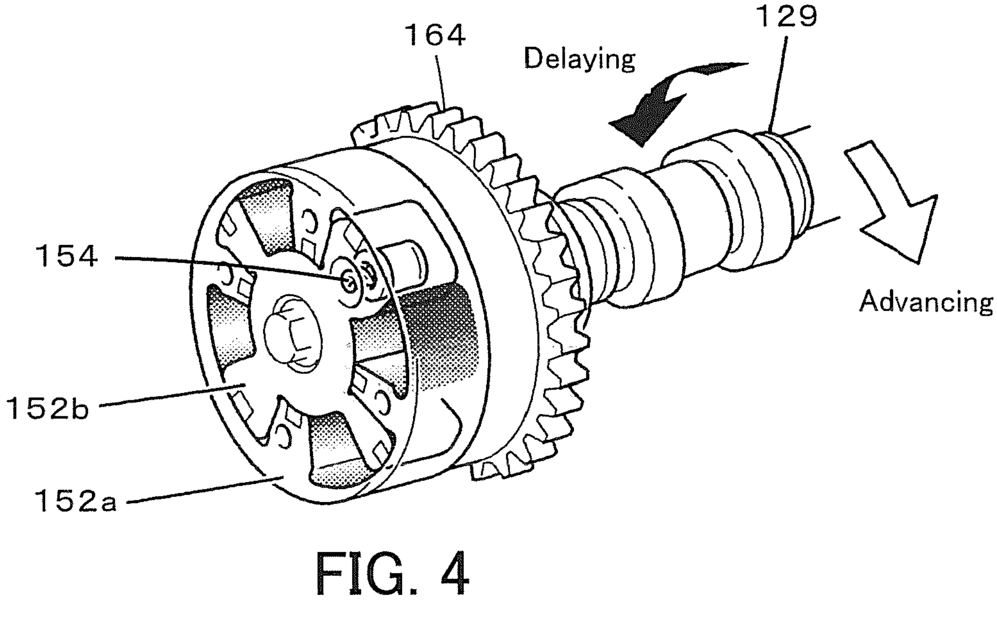
164
Delaying
129
154
Advancing
152b
152a

FIG. 4

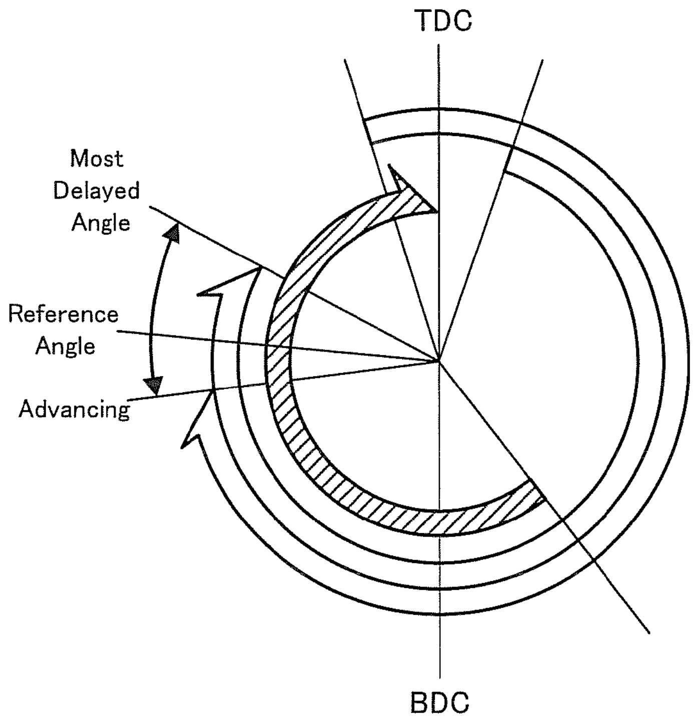
TDC
Most
Delayed
Angle
Reference
Angle
Advancing
BDC

FIG. 5

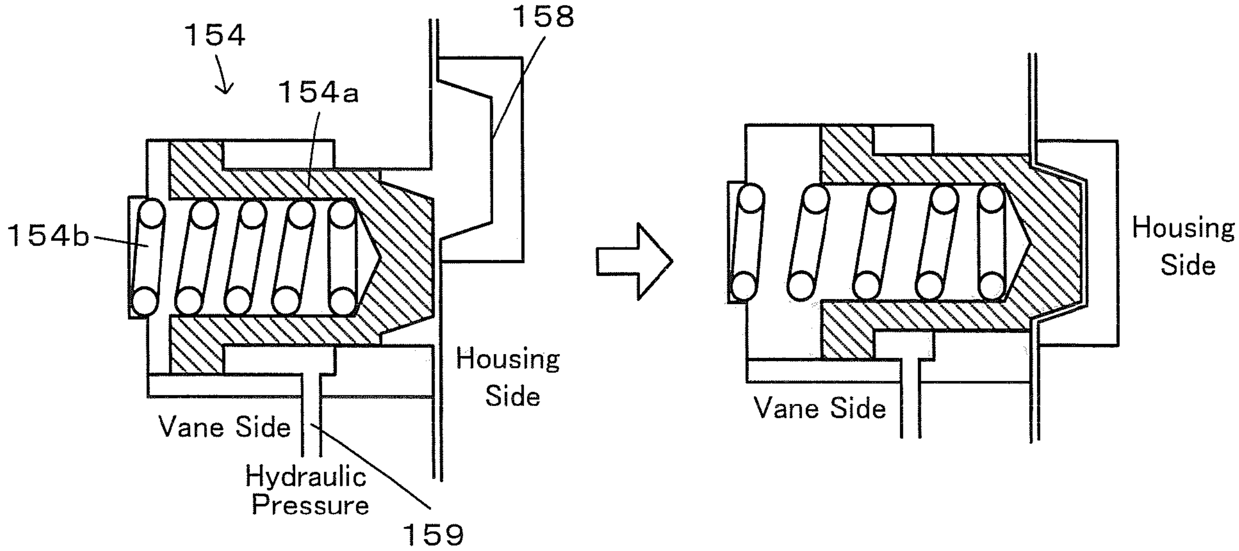
154
154a
158
154b
Housing
Side
Vane Side
Hydraulic
Pressure
159
Vane Side
Housing
Side

FIG. 6

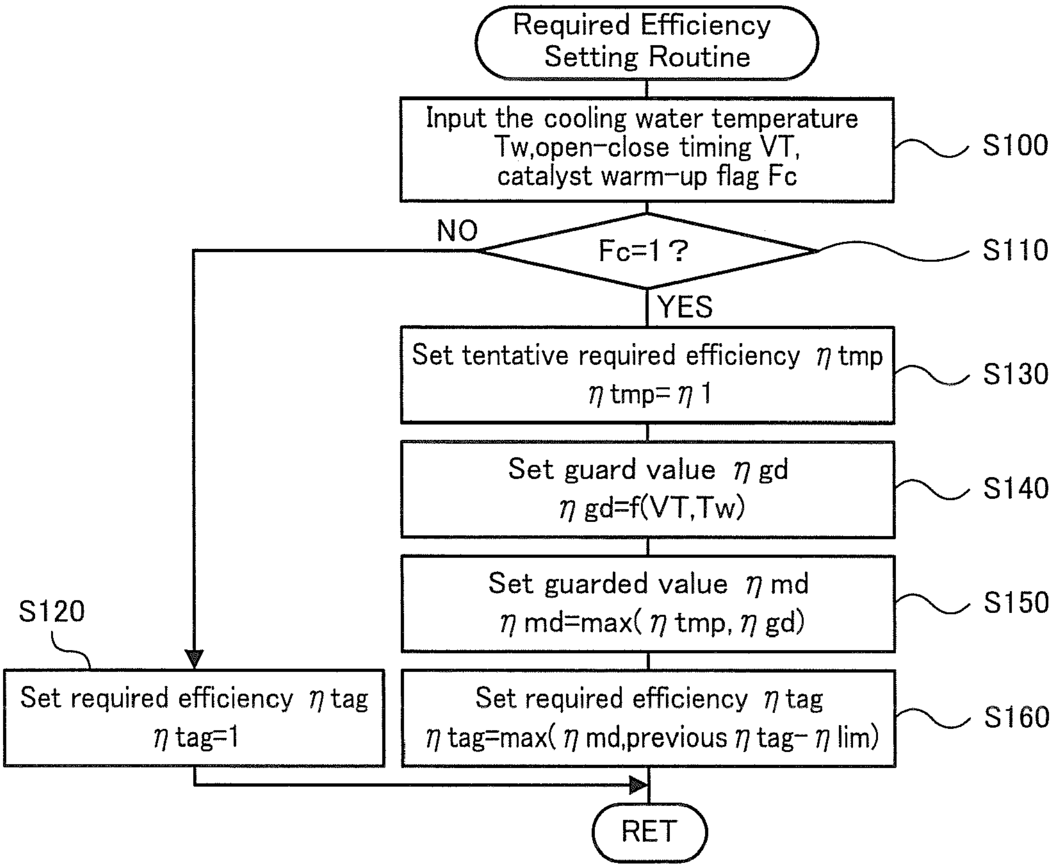
Required Efficiency Setting Routine
Input the cooling water temperature Tw,open-close timing VT, catalyst warm-up flag Fc
S100
Fc=1 ?
S110
NO
YES
Set tentative required efficiency η tmp
η tmp= η 1
S130
Set guard value η gd
η gd=f(VT,Tw)
S140
Set guarded value η md
η md=max( η tmp, η gd)
S150
S120
Set required efficiency η tag
η tag=1
Set required efficiency η tag
η tag=max( η md,previous η tag- η lim)
S160
RET

FIG. 7

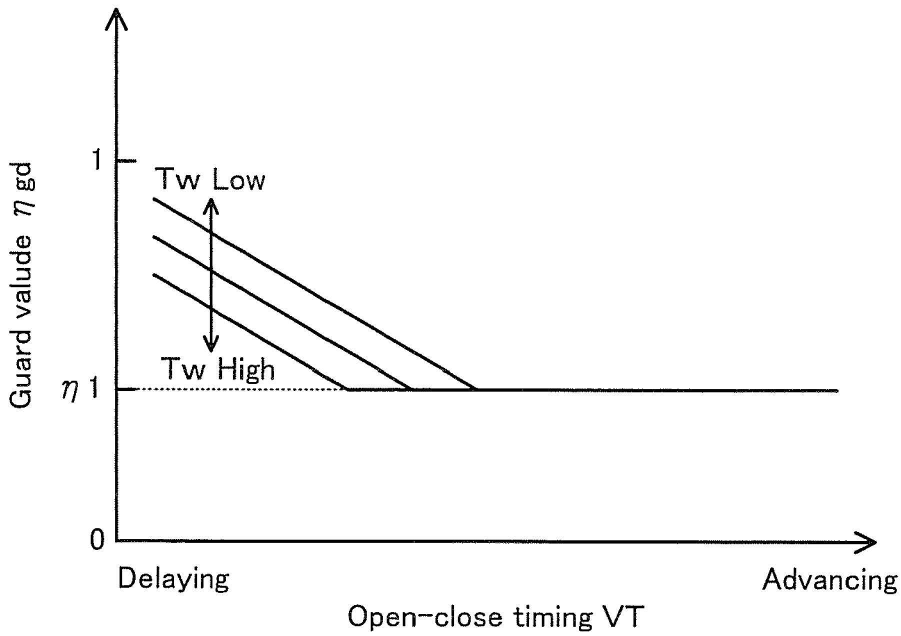
Guard valude η gd
1
Tw Low
Tw High
η 1
0
Delaying
Advancing
Open-close timing VT

FIG. 8

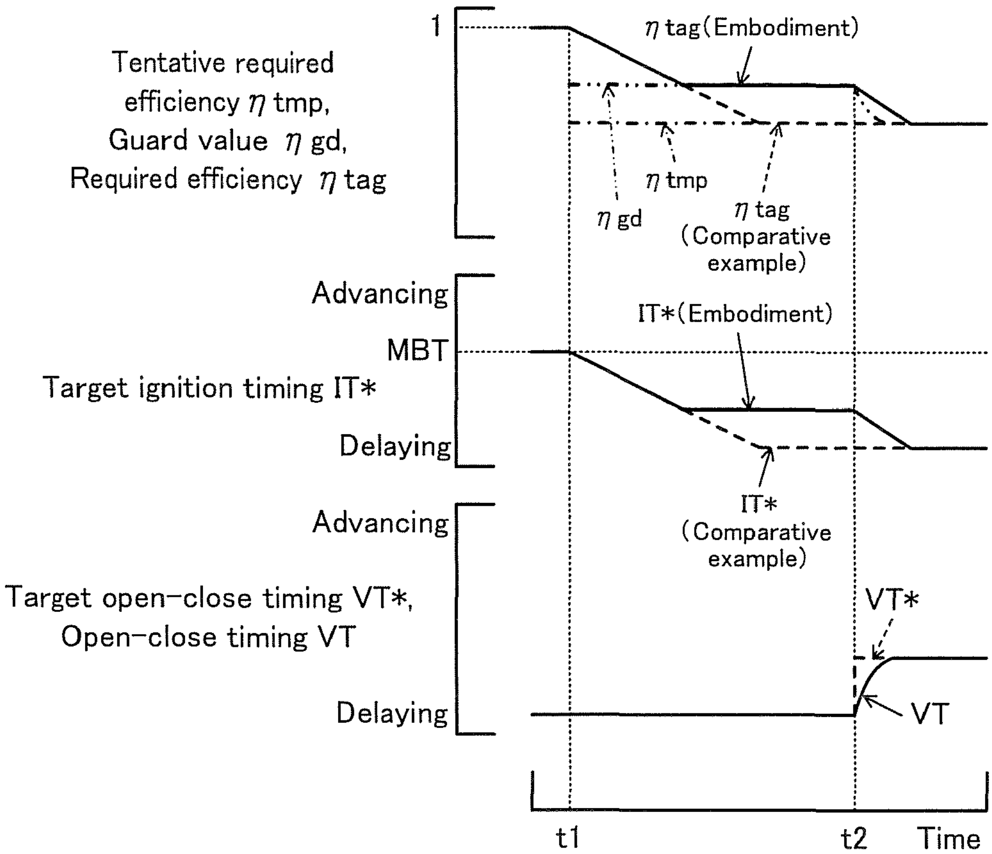
1
Tentative required efficiency η tmp,
Guard value η gd,
Required efficiency η tag
η tag(Embodiment)
η tmp
η gd
η tag (Comparative example)
Advancing
MBT
Target ignition timing IT*
Delaying
IT*(Embodiment)
IT* (Comparative example)
Advancing
Target open-close timing VT*,
Open-close timing VT
Delaying
VT*
VT
t1
t2
Time

FIG. 9

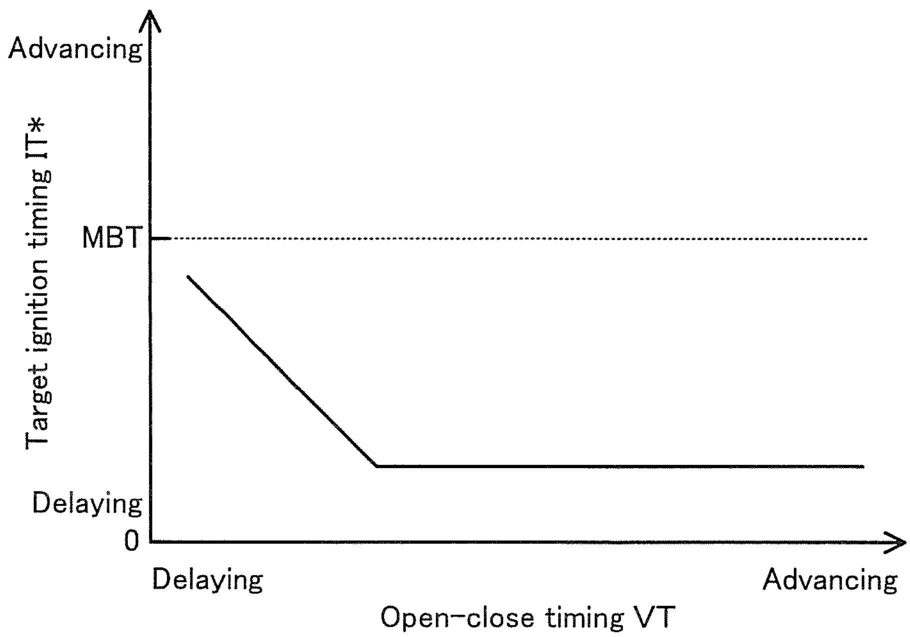
Advancing
Target ignition timing IT*
MBT
Delaying
0
Delaying
Advancing
Open-close timing VT

FIG. 10

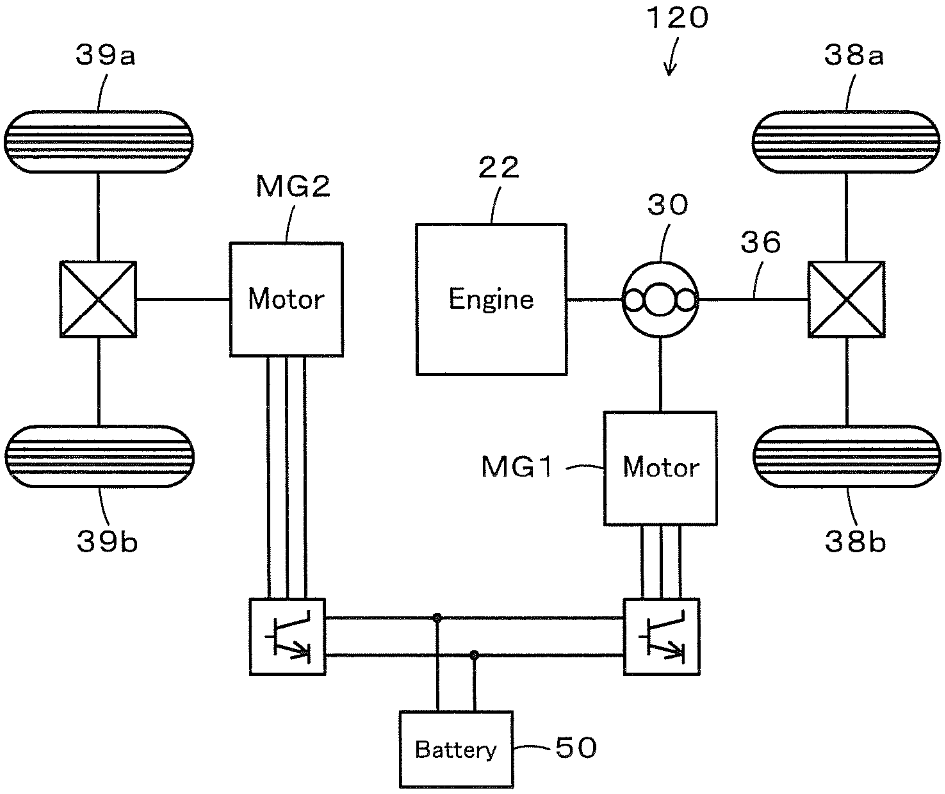
120
39a
38a
MG2
22
30
36
Motor
Engine
MG1
Motor
39b
38b
Battery
50

FIG. 11

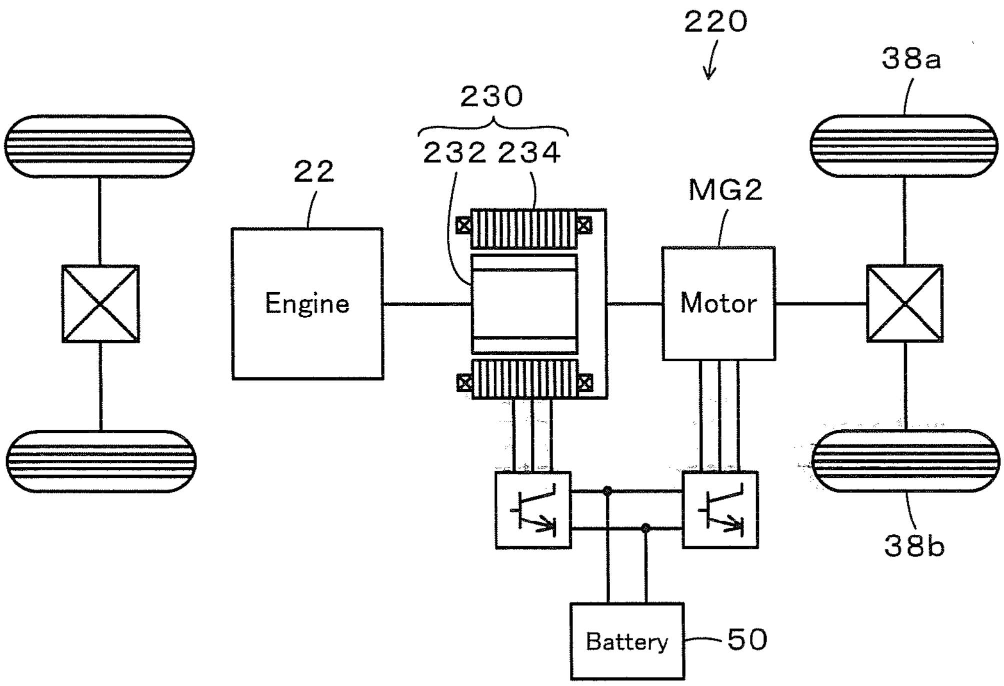
220
38a
230
232 234
22
MG2
Engine
Motor
38b
Battery
50

FIG. 12

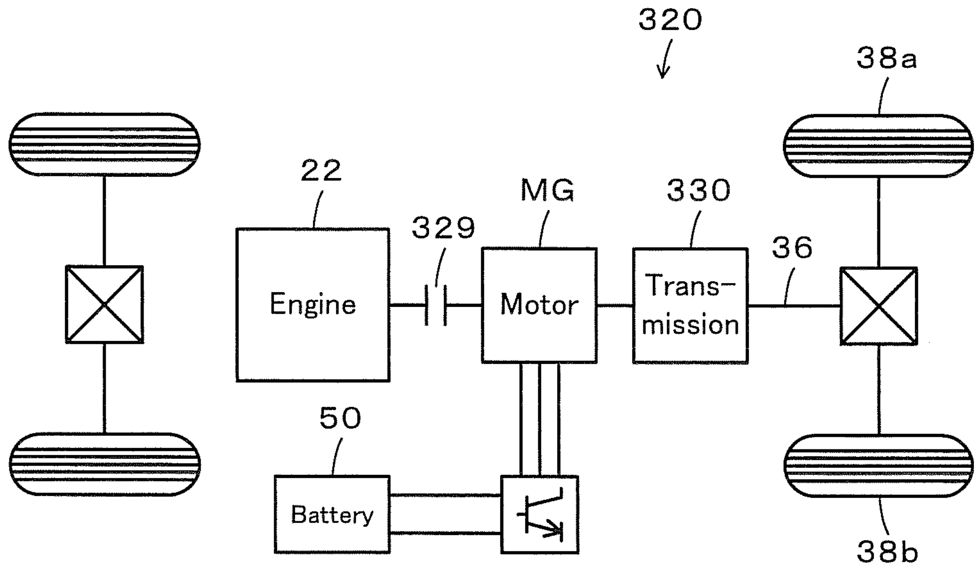
320
38a
22
MG
330
329
36
Engine
Motor
Trans-
mission
50
Battery
38b

FIG. 13

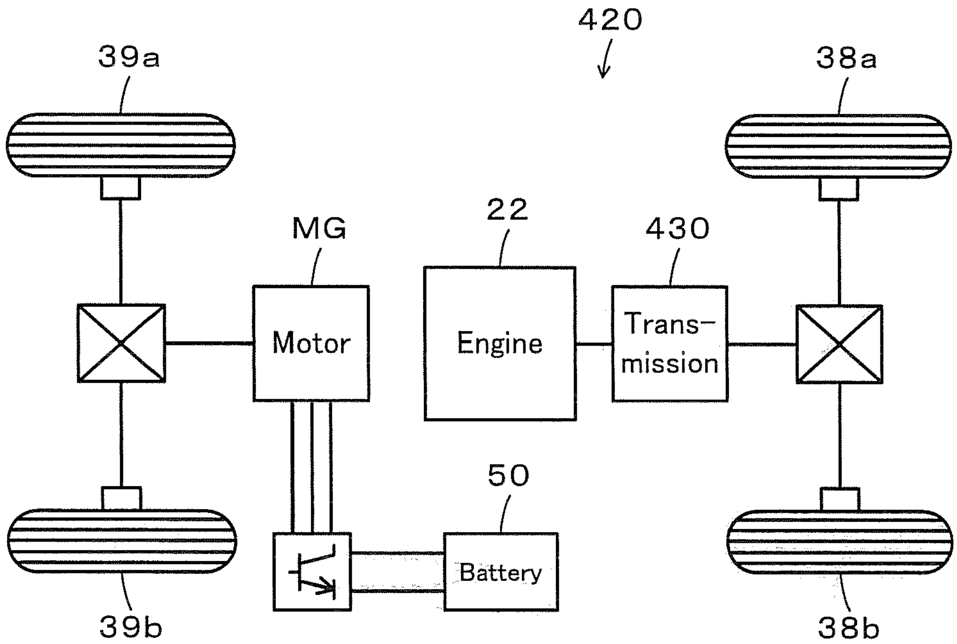
420
39a
38a
MG
22
430
Motor
Engine
Trans-
mission
50
Battery
39b
38b

FIG. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012197771 A